# EUROPÄISCHE PATENTSCHRIFT

(11) **EP 2 691 622 B1**
(45) Veröffentlichungstag und Bekanntmachung des Hinweises auf die Patenterteilung: **28.06.2017**
(21) Anmeldenummer: 12708086.9
(22) Anmeldetag: 01.03.2012
(51) Int. Cl.: F02B 33/36, F02D 9/02, F02D 9/08, F02B 33/44, F02M 31/087, F02M 31/08, F02B 37/04, F02B 39/04

(54) **VERFAHREN ZUM BETRIEB EINER MENGENGEREGELTEN BRENNKRAFTMASCHINE UND BRENNKRAFTMASCHINE**
METHOD FOR OPERATING A QUANTITY-REGULATED INTERNAL COMBUSTION ENGINE AND INTERNAL COMBUSTION ENGINE
PROCÉDÉ POUR FAIRE FONCTIONNER UN MOTEUR À COMBUSTION INTERNE À DÉBIT RÉGULÉ ET MOTEUR À COMBUSTION INTERNE

(30) Priorität: 30.03.2011 DE 102011006388
(43) Veröffentlichungstag der Anmeldung: 05.02.2014
(73) Patentinhaber: Bayerische Motoren Werke Aktiengesellschaft, 80809 München (DE)
(72) Erfinder: FISCHER, Hubert, 82291 Mammendorf (DE)
(86) Internationale Anmeldenummer: PCT/EP2012/000890
(87) Internationale Veröffentlichungsnummer: WO 2012/130369

(56) Entgegenhaltungen:
- WO-A1-94/24426
- DE-A1- 3 124 668
- DE-A1- 3 313 679
- DE-A1- 3 819 646
- US-A- 3 180 079
- US-A1- 2009 314 005

## Beschreibung

Die Erfindung betrifft ein Verfahren zum Betrieb einer mengengeregelten Brennkraftmaschine mit den Merkmalen aus dem Oberbegriff des Patentanspruchs 1 sowie eine Brennkraftmaschine mit den Merkmalen aus dem Oberbegriff des Patentanspruchs 2. Aus der deutschen Offenlegungsschrift DE 101 16 264 A1 ist ein Verfahren zum Betrieb einer Brennkraftmaschine mit mechanischer Aufladung und variabler Verdichtung bekannt. Bei dem Verfahren zum Betrieb der Brennkraftmaschine mit einem im Ansaugtrakt angeordneten mechanischen Kompressor, der über eine Koppeleinrichtung über die Kurbelwelle antreibbar ist, wird Verbrennungsluft in einen Motoreinlass gefördert. Weiterhin ist eine Einrichtung zur variablen Einstellung des Verdichtungsverhältnisses im Brennraum vorgesehen, über die im Teillastbereich der Brennkraftmaschine ein höheres Verdichtungsverhältnis und im Vollastbereich ein niedrigeres Verdichtungsverhältnis einstellbar ist. Der vom Kompressor zu fördernde Luftmassenstrom ist variabel einstellbar, wobei im Teillastbereich unterhalb eines Referenzlastwertes der Kompressor zur Einstellung eines Unterdrucks im Lufteinlass im Drossel- bzw. Expanderbetrieb betrieben wird.

Weiter ist das o. g. Drossel-Verfahren für Brennkraftmaschinen aus dem Buch "Turbo- und Kompressormotoren", Entwicklung und Technik, Motor buchverlag, Hack/Langkabei, 2. Ausgabe 2001, mit der ISBN-Nr. 3-613-01950-7 bekannt. In diesem Buch ist in dem Kapitel "Ladertypen im Detail" auf Seite 72, unter dem Unterpunkt "Regelung" dieses bekannte Drossel-Verfahren näher erläutert.

Nachteilig an dem o. g. Verfahren ist eine noch nicht ausreichende Wirkungsgradsteigerung der mengengeregelten Brennkraftmaschine, der noch deutlich unter dem einer qualitätsgeregelten Brennkraftmaschine, bei der die Laststeuerung beispielsweise mittels einem Magerbrennverfahren (A > 1) erfolgt, liegt.

Aus den Dokumenten DE3313679A1 und WO94/24426A1 sind weitere Verfahren zur Füllungsregelung mit einer Expansionsmaschine und einem Wärmetauscher zur Erwärmung der Ansaugluft bekannt geworden.

Die DE3124668A1 zeigt darüber hinaus eine Reihenschaltung einer Expansionsmaschine und eines Turboladers. Weiterhin ist stromab der Expansionmaschine ein Wärmetauscher angeordnet. Aufgabe der vorliegenden Erfindung ist es, ein Verfahren zum Betrieb einer mengengeregelten Brennkraftmaschine aufzuzeigen, bei dem der Wirkungsgrad wesentlich verbessert wird.

Diese Aufgabe wird verfahrensmäßig durch das Merkmal im kennzeichnenden Teil des Patentanspruchs 1 und vorrichtungsmäßig durch das Merkmal im kennzeichnenden Teil des Patentanspruchs 2 gelöst. Es wird im Folgenden gezeigt, dass durch die Nutzung des Expansionsprozesses im Ansaugtrakt nicht nur die Ladungswechselverluste vermieden, sondern in Verbindung mit dem erfindungsgemäßen Abgaswärmetauscher deutliche Wirkungsgradvorteile und damit wesentliche Verbrauchsvorteile erzielt werden. Weiter lässt sich diese Technologie besonders gut mit einer Abgasturboaufladung verbinden. Im Folgenden wird bezüglich der Erfindung auch von einer effizienten Laststeuerung (ELS) einer mengengeregelten Brennkraftmaschine gesprochen.

Ähnlich wie durch einen Kompressor (mechanisch oder elektrisch angetrieben) im Ansaugtrakt die Brennkraftmaschinenleistung durch Verdichtung der Verbrennungsluft erhöht werden kann, kann durch eine Expansionsmaschine anstelle der Drosselklappe die Verbrennungsluft "verdünnt", d. h. auf eine niedrigere Dichte eingestellt und damit die Brennkraftmaschinenleistung reduziert werden. Dadurch werden die Drosselverluste einer Drosselklappe praktisch vollständig vermieden. Der Wirkungsgradvorteil ist mit einer variablen Ventilsteuerung vergleichbar, wie sie beispielsweise von BMW unter dem Namen "Valvetronic" in der Großserie eingesetzt wird. Die Arbeit, die in der Expansionsmaschine verrichtet wird, kann dabei über eine mechanische Ankopplung (z. B. Riementrieb) der Brennkraftmaschine zugeführt werden. Dies entspricht soweit dem bekannten Stand der Technik.

Eine weitere, deutliche Wirkungsgradsteigerung in der Teillast der Brennkraftmaschine lässt sich erreichen, wenn erfindungsgemäß über einen Wärmetauscher am Abgasstrang Wärmeenergie auf die Verbrennungsluft über tragen wird. Dadurch wird der Volumenstrom der Verbrennungsluft erhöht und dazu proportional die Arbeit, die in der Expansionsmaschine im Ansaugtrakt verrichtet wird. Nach der Expansionsmaschine wird die Verbrennungsluft durch einen Kühler, z. B. einem Ladeluftkühler, wieder auf übliche Verbrennungslufttemperatur gekühlt, bevor sie der Brennkraftmaschine zugeführt wird. Somit können Wirkungsgrade im Teillastbereich einer mengengeregelten Brennkraftmaschine erreicht werden, die deutlich über dem eines variablen Einlassventiltriebs liegen.

Weiter lässt sich das Verfahren hervorragend mit einer Abgasturboaufladung verbinden (ein Ladeluftkühler ist in diesem Fall in vorteilhafter Weise bereits vorhanden). Dabei kann ein Teil der Wärmeenergie im Abgas in Form einer Druckerhöhung der Verbrennungsluft der Expansionsmaschine zugeführt werden bei gleichzeitiger Reduzierung der Temperatur im Wärmetauscher. Dies führt in vorteilhafter Weise zu einer niedrigeren Temperaturbelastung der Bauteile im Ansaugtrakt. Der wirkungsgradverbessemde Betrieb der Expansionsmaschine kann damit durch eine höhere Druckdifferenz über die Expansionsmaschine in höhere Lastbereiche der Brennkraftmaschine ausgedehnt werden. Der theoretische, im Vergleichsprozess erreichbare Wirkungsgrad entspricht dem einer Prozessführung mit vollständiger Expansion und liegt damit sogar über dem einer qualitätsgeregelten Laststeuerung.

In einer weiteren erfindungsgemäßen Ausgestaltung kann die Expansionsmaschine statt an eine Brennkraftmaschine auch an eine elektrische Maschine oder einen Generator gekoppelt und der erzeugte elektrische Strom einem elektrischen Speicher oder direkt einem elektrischen Verbraucher zugeführt werden.

Bei entsprechender Auslegung, d. h. um die zur Laststeuerung eingesetzte Maschine variabel, sowohl als Expansionsmaschine als auch als Verdichter oder Kompressionsmaschine zu betreiben, lässt sich zusätzlich das Ansprechverhälten des Abgasturboladers verbessern und damit ein Brennkraftmaschinenkonzept realisieren, das hohe Leistung mit sehr günstigem Kraftstoffverbrauch und bei Verwendung eines Abgasturboladers einem sehr guten Responseverhalten (Vermeidung eines "Turbolochs") vereint.

Zusammengefasst ergeben sich durch das erfindungsgemäße Verfahren (ELS) und die erfindungsgemäß ausgestaltete Brennkraftmaschine folgende Vorteile:
❖ Sehr günstiger Kraftstoffverbrauch bei hohem Leistungspotential und sehr gutem Responseverhalten bei Abgasturboaufladung.
❖ Keine aufwendigen, internen Brennkraftmaschinentechniken (z. B. variable Ventilsteuerung) oder Brennverfahren (z. B. Magerbrennverfahren mit entsprechend aufwendiger Abgasnachbehandlung, HCCI etc.) erforderlich.
❖ Das erfindungsgemäße System (Verfahren und Vorrichtung) lässt sich ohne Änderung am Brennkraftmaschinenkonzept (z. B. an einer TGDI-Brennkraftmaschine (Turbo-Benzin-Direkteinspritzung)) über ausschließlich externe Maßnahmen (Umschaltklappe, Abgas-Verbrennungsluft-Wärmetauscher, Expansionsmaschine, Ladeluftkühler) darstellen.
❖ Bei dem erfindungsgemäßen Brennverfahren handelt es sich um ein konventionelles λ = 1 Brennverfahren ohne aufwendiger Abgasnachbehandlung und damit ist problemlos ein weltweiter Einsatz der Erfindung möglich.
❖ Im Verhältnis zum Nutzen existieren nur ein sehr geringer baulicher Aufwand und ein sehr geringes technisches Risiko.

Im Folgenden ist die Erfindung anhand des Standes der Technik in acht Figuren und anhand eines bevorzugten Ausführungsbeispiels in zwei Figuren näher erläutert.
- Fig. 1: zeigt schematisch eine Brennkraftmaschine mit einer Laststeuerung über eine Drosselklappe.
- Fig. 2: zeigt einen zu Fig. 1 gehörenden Prozessverlauf in einem ersten p-V-Diagramm (Druck zu Volumen über ein Lastspiel).
- Fig. 3: zeigt schematisch eine Brennkraftmaschine mit einer Laststeuerung über einen variablen Ventiltrieb (VVT).
- Fig. 4: zeigt einen zu Fig. 3 gehörenden Prozessverlauf in einem zweiten p-V-Diagramm (VVT).
- Fig. 5: zeigt schematisch eine Brennkraftmaschine mit einer Laststeuerung über eine Expansionsmaschine im Ansaugtrakt (VLS, volumetrische Laststeuerung).
- Fig. 6: zeigt einen zu Fig. 5 gehörenden Prozessverlauf in einem dritten p-V-Diagramm (VLS).
- Fig. 7: zeigt schematisch eine Brennkraftmaschine mit einer Laststeuerung mit Expansionsmaschine und Abgaswärmenutzung (ELS, effiziente Laststeuerung).
- Fig. 8: zeigt einen zu Fig. 7 gehörenden Prozessverlauf in einem vierten p-V-Diagramm (ELS).
- Fig. 9: zeigt schematisch eine Brennkraftmaschine mit einer erfindungsgemäßen Laststeuerung (ELS) mit zusätzlicher Abgasturbolaufladung.
- Fig. 10: zeigt einen zu Fig. 9 gehörenden Prozessverlauf in einem fünften p-V-Diagramm (ELS und ATL).

Im Folgenden gelten in allen Figuren für gleiche Bauelemente die gleichen Bezugsziffern.

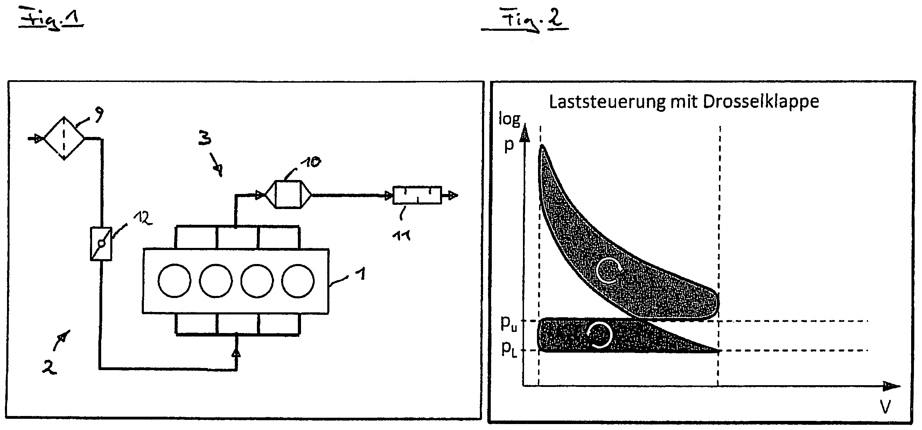

Fig. 1 zeigt schematisch eine Brennkraftmaschine mit einer Laststeuerung über eine Drosselklappe gemäß dem Stand der Technik. Über einen Ansaugtrakt 2 saugt eine Brennkraftmaschine 1 mit durch vier Kreise symbolisch dargestellten Zylindern eine Verbrennungsluft zuerst durch einen Ansauggeräuschdämpfer 9 und anschließend vorbei an einem Drosselelement 12, beispielsweise einer Drosselklappe oder ein Walzenschieber, an. Diese angesaugte Verbrennungsluft wird anschließend mit Kraftstoff in den Zylindern verbrannt und als Abgas durch einen Abgasstrang 3 wieder ausgestoßen. In dem Abgasstrang 3 sind in Strömungsrichtung des Abgases eine Abgasreinigungsanlage 10 zur Abgasreinigung und anschließend ein Schalldämpfer 11 angeordnet.

Diese klassische Laststeuerung einer mengengeregelten (λ = 1) Brennkraftmaschine 1 erfolgt durch das Drosselelement 12 durch "Verdünnen" der Ansaugluft im Ansaugtrakt vor den Gaswechseleinlassventilen der Brennkraftmaschine 1. Fig. 1 zeigt wie oben dargestellt eine entsprechende Anordnung am Beispiel einer Vierzylinder-Hubkolben-Brennkraftmaschine.

Fig. 2 zeigt einen zu Fig. 1 gehörenden Prozessverlauf in einem ersten p-V-Diagramm (Druck zu Volumen über ein Lastspiel) für eine Teillast der Brennkraftmaschine 1. Da ein p-V-Diagramm für eine Brennkraftmaschine 1 für den Fachmann aus dem Maschinen- oder Motorenbau per se bekannt und geläufig ist, wird dieses nicht explizit bis in das letzte Detail erläutert. Zur besseren Auflösung des niederen Druckbereichs ist für den Druck eine logarithmische Skala aufgetragen.

Um eine Teillast der Brennkraftmaschine 1 einzustellen, wird bei einem mengengeregelten Lastverfahren die Menge der Luft reduziert, die der Brennkraftmaschine 1 zugeführt wird. Beim Drosselverfahren wird hierzu die Luft durch das Drosselelement 12 auf den Druck p_{L} gedrosselt, bei dem sich die für die erforderliche Last benötigte Dichte der Verbrennungsluft einstellt. Da die Brennkraftmaschine 1 die Verbrennungsluft bei dem niedrigen Druck p_{L} ansaugt, das Abgas aber gegen den Umgebungsdruck pᵤ ausschieben muss, wird die Arbeit in der Ladungswechselschleife negativ und geht im Arbeitsprozess verloren. Diese Ladungswechselschleife ist die entgegen dem Uhrzeigersinn drehende Schleife, dargestellt durch einen kreisförmigen Pfeil, im p-V-Diagramm. Dadurch ergeben sich für das Drosselverfahren in der Teillast schlechte Wirkungsgrade.

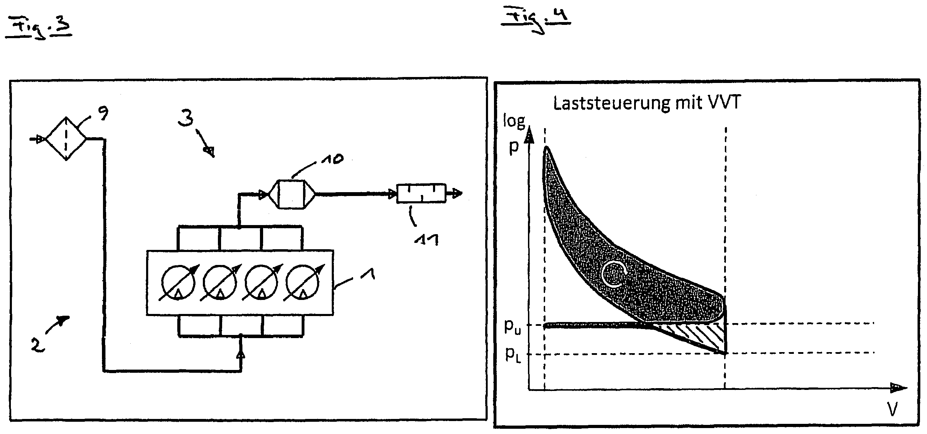

Fig. 3 zeigt schematisch eine Brennkraftmaschine 1 mit einer ungedrosselten Laststeuerung über einen variablen Ventiltrieb (VVT), ebenfalls gemäß dem Stand der Technik. Fig. 3 unterscheidet sich von Fig. 1 dadurch, dass das Drosselelement 12 entfallen ist, dafür jedoch die Laststeuerung mittels eines variablen Ventiltriebes (VVT), wie beispielsweise der BMW "Valvetronic". stattfindet. Bei diesem ungedrosselten Verfahren erfolgt die Laststeuerung durch eine Hub- und/oder Öffnungsdauervariation der Gaswechseleinlassventile. Dies ist symbolisch jeweils durch einen Pfeil (für die Variabilität) und ein Dreieck (für das Gaswechseleinlassventil) in den Zylindern dargestellt.

Eine bekannte Maßnahme zur Vermeidung der Ladungswechselverluste bei mengengeregelten Lastverfahren ist der Einsatz des oben genannten variablen Ventiltriebes (VVT). Dabei werden die Gaswechseleinlassventile nur so lange oder weit geöffnet, bis die erforderliche Verbrennungsluftmenge im Zylinder ist. Auf das Drosselelement 12 wird hierbei verzichtet. Der zugehörige Prozessverlauf ist in Fig. 4 dargestellt.

Fig. 4 zeigt den zu Fig. 3 gehörenden Prozessverlauf in einem zweiten p-V-Diagramm (VVT). Die erforderliche Verbrennungsluftmenge wird dabei bei Umgebungsdruck p_{U} angesaugt. Die nachfolgende Expansion im Zylinder auf p_{L} und Rückverdichtung bis p_{U} erfolgt nahezu verlustfrei. Danach beginnt der eigentliche Arbeitsprozess. Die linksdrehende, verlustbehaftete Prozessschleife aus Fig. 2 wird dabei weitgehend vermieden. Der Prozessverlauf weicht dennoch vom optimalen Otto-Brennkraftmaschinenkreisprozess ab, da sich der schraffierte Bereich unterhalb des Umgebungsdrucks p_{U} beim VVT-Vertahren nicht erschließen lässt. Der maximale Wirkungsgrad des Otto-Brennkraftmaschinenkreisprozesses, wie er sich in der Volllast oder bei einer qualitätsgeregelten Laststeuerung (z. B. Magerbrennverfahren, A > 1) ergibt, lässt sich daher mit diesem Verfahren in der Teillast nicht erreichen.

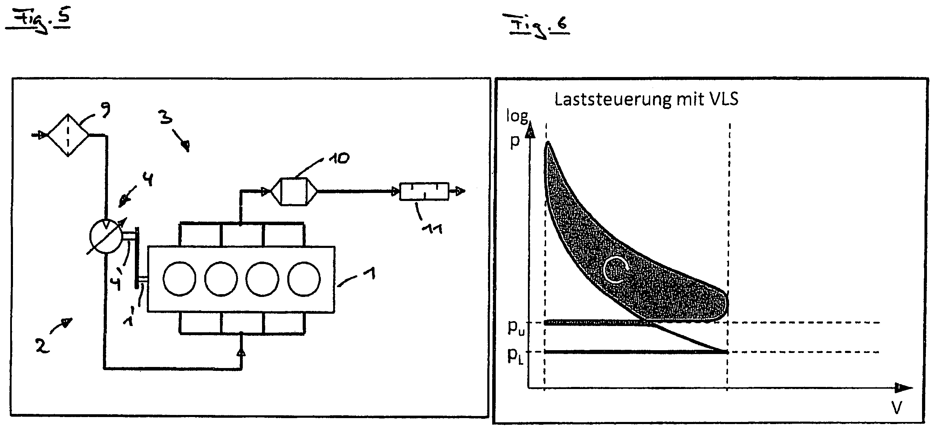

Fig. 5 zeigt schematisch eine Brennkraftmaschine 1 mit einer ebenfalls bekannten Laststeuerung mit einer Expansionsmaschine 4 im Ansaugtrakt 2 (VLS, volumetrische Laststeuerung). Abweichend zu den Fig. 1 und 3 weist die Brennkraftmaschine 1 in Fig. 5 weder ein Drosselelement 12 noch einen variablen Ventiltrieb (VVT) auf. Demgegenüber ist im Ansaugtrakt 2 die Expansionsmaschine 4 angeordnet, deren Abtriebswelle 4' mit einer Abtriebswelle 1' der Brennkraftmaschine 1, beispielsweise mit einem Riementrieb koppelbar ist.

Unter einer Expansionsmaschine wird beispielsweise ein Kompressor, eine Hubkolbenmaschine, eine Turbine, eine Schraube oder auch eine Flügelzelle verstanden.

Somit ergibt sich eine alternative Möglichkeit zur Vermeidung der Ladungswechselverluste durch den Einsatz der Expansionsmaschine 4. Dabei wird die Verbrennungsluft auf den Druck p_{L} expandiert, bei dem sich die für die erforderliche Last benötigte Dichte einstellt. Die Expansionsarbeit wird über eine mechanische Kupplung (z. B. Riementrieb) der Brennkraftmaschine 1 zugeführt, alternativ könnte auch ein elektrischer Speicher über einen Generator geladen werden.

Fig. 6 zeigt einen zu Fig. 5 gehörenden Prozessverlauf in einem dritten p-V-Diagramm (VLS, volumetrische Laststeuerung). Die Expansionsmaschine 4 saugt die Verbrennungsluft bei Umgebungsdruck p_{U} an und expandiert sie auf p_{L}. Anschließend Ausschieben der Verbrennungsluft aus der Expansionsmaschine 4 und das Ansaugen der Brennkraftmaschine 1 erfolgt dann arbeitsneutral auf dem Druckniveau p_{L}. Die Verdichtungsarbeit in der Brennkraftmaschine 1 von p_{L} auf p_{U} wird dabei durch die Expansionsarbeit in der Expansionsmaschine 4 ausgeglichen. Der resultierende Prozessverlauf entspricht dem der Laststeuerung mit einem variablen Ventiltrieb VVT (vgl. Fig. 4).

Dieses Laststeuerverfahren kann als eine Umkehr des bei der Aufladetechnik mit Kompressor genutzten Funktionsprinzips für den Niedriglastbereich verstanden werden.

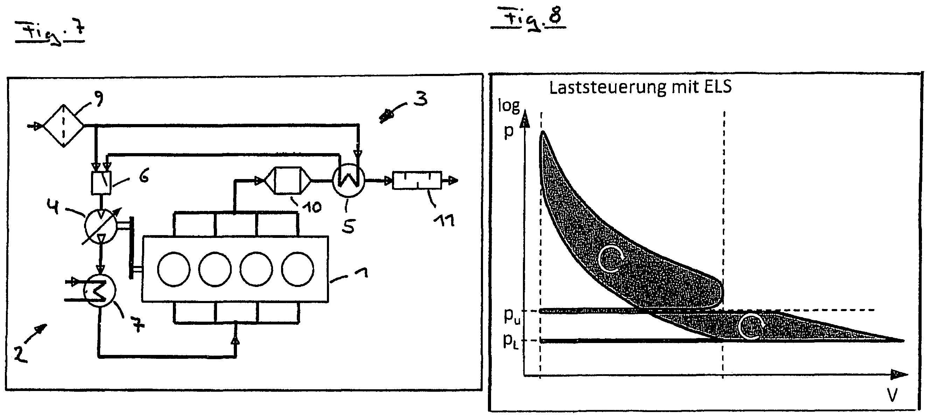

Fig. 7 zeigt schematisch eine Brennkraftmaschine 1 mit einem Laststeuerverfahren mit Expansionsmaschine und Abgaswärmenutzung (ELS, effiziente Laststeuerung). Fig. 7 unterscheidet sich von Fig. 5 dadurch, dass im Abgasstrang 3 ein Wärmetauscher 5, beispielsweise ein Gas-Gas-Wärmetauscher, vorgesehen ist, durch den die von der Brennkraftmaschine 1, bzw. der Expansionsmaschine 4 angesaugte Verbrennungsluft vorgewärmt werden kann. Um eine definierte Temperatur einzustellen ist nach dem Wärmetauscher 5 und vor der Expansionsmaschine 4 ein Mischer 6 im Ansaugtrakt 2 vorgesehen, der beispielsweise über eine Klappensteuerung oder über eine Walzensteuerung verfügt. Zusätzlich ist in dem Ansaugtrakt 2 zwischen der Expansionsmaschine 4 und der Brennkraftmaschine 1 ein zusätzlicher Kühler 7, z. B. ein Ladeluftkühler, vorgesehen zum Abkühlen der vorgewärmten Verbrennungsluft. Es kann somit eine weitere Wirkungsgraderhöhung und eine Verbesserung des Kraftstoffverbrauchs erreicht werden, indem die Verbrennungsluft mit Hilfe des Wärmetauschers 5 im Abgasstrang 3 erhitzt wird und danach der Expansionsmaschine 4 zugeführt wird und nach der Expansion auf den Druck p_{L} auf ein niedrigeres Verbrennungslufttemperaturniveau mit dem Kühler 7, z. B. mit einem Ladeluftkühler, abgekühlt wird. Den daraus resultierenden Prozessverlauf zeigt Fig. 8.

Fig. 8 zeigt einen zu Fig. 7 gehörenden Prozessverlauf in einem vierten p-V-Diagramm (ELS). Der Expansionsmaschine 4 wird die Verbrennungsluft bei Urngebungsluftdruck p_{U} zugeführt. Im Vergleich zu Fig. 6 ergibt sich jedoch durch die mit Hilfe des Wärmetauschers 5 erhöhte Verbrennungslufttemperatur ein deutlich vergrößertes Verbrennungsluftvolumen. Die in der Expansionsmaschine 4 erzeugte Expansionsarbeit steigt dabei proportional zum Volumen der erhitzten Verbrennungsluft an. Nach Expansion auf das Druckniveau p_{L} und dem Ausschieben aus der Expansionsmaschine 4 wird die Verbrennungsluft durch den Kühler 7 auf annähernd Umgebungslufttemperatur abgekühlt. Der weitere Prozessverlauf ist dann für die Brennkraftmaschine 1 mit dem bei gedrosseltem Betrieb (Fig. 2) identisch. Im Gegensatz zum Drosselverfahren (Fig. 2) oder VVT-Verfahren (Fig. 4) bleibt in der Arbeitsbilanz eine rechtsdrehende Prozessschleife (Pfeil) unterhalb des Umgebungsluftdruckes p_{U} übrig, aus der zusätzliche Arbeit gewonnen und damit eine Verbesserung des Wirkungsgrades der Brennkraftmaschine 1 erreicht werden kann.

Wie bereits beschrieben, kann bei einer variablen Auslegung der Expansionsmaschine 4 als Expansions- und Kompressionsmaschine zusätzlich eine Aufladung realisiert werden. Für den Aufladebetrieb der Brennkraftmaschine 1 wird durch eine Umschaltklappe im Mischer 6 vor der Expansionsmaschine 4 die Luftführung über den Wärmetauscher 5 geschlossen und der Expansionsmaschine 4 direkt kalte Luft zugeführt. Generell kann die Klappe in dem Mischer 6 (Temperaturregler für die Verbrennungsluft) im Wärmetauscherbetrieb durch Mischung von erwärmter mit kalter Verbrennungsluft ein gewünschtes Temperaturniveau vor der Expansionsmaschine 4 einstellen. Damit lässt sich das System sehr flexibel auf Betriebsbedingungen oder Betriebsgrenzen (z. B. Grenztemperaturen, Kühlergrößen, Expansionsverhältnis usw.) einstellen. Das Prinzip der Laststeuerung mit der Expansionsmaschine und der Abgaswärmenutzung wird hier ELS (effiziente Laststeuerung) genannt.

Das erfindungsgemäße Verfahren zeichnet sich unter anderem dadurch aus, dass die Verbrennungsluft, bevor sie durch die Expansionsmaschine 4 strömt in dem Wärmetauscher 5 von dem Abgas der Brennkraftmaschine 1 aufgeheizt wird. Weiterhin wird die aufgeheizte Verbrennungsluft vor Eintritt in die Expansionsmaschine 4 in dem Mischer 6 mit nicht aufgeheizter Verbrennungsluft gemischt. Darüber hinaus wird die Verbrennungsluft nach der Expansionsmaschine 4 und vor dem Einlassventil der Brennkraftmaschine in dem Kühler 7 abgekühlt.

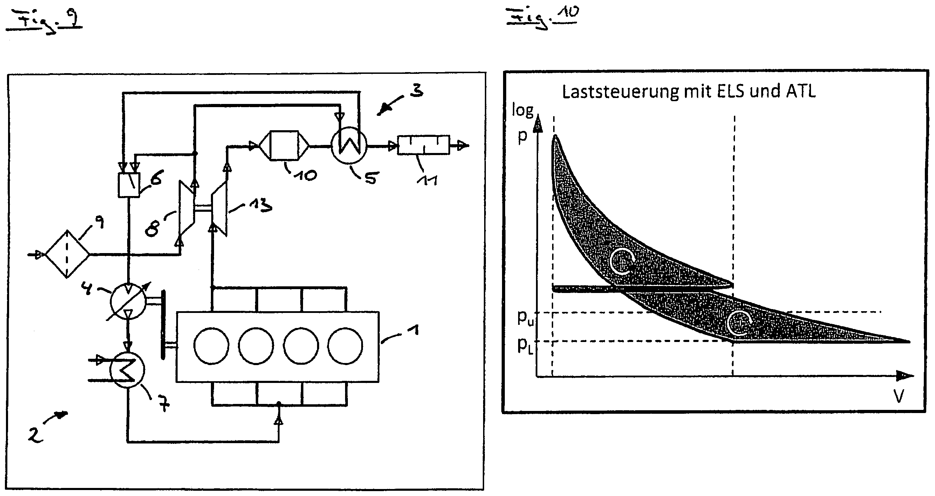

Fig. 9 zeigt schematisch eine Brennkraftmaschine 1 mit einer erfindungsgemäßen Laststeuerung (ELS). Gegenüber der Brennkraftmaschine 1 in Fig. 7 weist die Brennkraftmaschine 1 in Fig. 9 einen Abgasturbolader mit einer Abgasturbine 13 im Abgasstrang 3 und einem Verdichter 8 im Ansaugtrakt 2 auf. Die Abgasturbine 13 des Abgasturboladers ist zwischen Brennkraftmaschine 1 und Abgasreinigungsanlage 10 angeordnet, der Verdichter des Abgasturboladers (ATL) ist zwischen dem Ansauggeräuschdämpfer 9 und dem Mischer 6 bzw. dem Wärmetauscher 5 angeordnet.

Aus Fig. 9 geht hervor, dass sich die effiziente Laststeuerung (ELS) erfindungsgemäß auch sehr gut mit einer Abgasturboaufladung verbinden lässt. In Fig. 9 ist die Brennkraftmaschine 1 mit einer Abgasturboaufladung, ergänzt um die Expansionsmaschine 4 dargestellt. Der zugehörige Prozessverlauf ist in Abbildung 10 ersichtlich.

Fig. 10 zeigt einen zu Fig. 9 gehörenden Prozessverlauf in einem fünften p-V-Diagramm (ELS und ATL). Durch den Abgasturbolader (ATL) kann in der höheren Teillast die Verbrennungsluft vorverdichtet und damit die Druckdifferenz über die Expansionsmaschine 4 erhöht werden. Damit können die Wirkungsgradvorteile der Expansionsmaschine 4 auf einen höheren Lastbereich der Brennkraftmaschine 1 ausgedehnt werden. Durch eine nicht dargestellte Waste-Gate-Steuerung (Bypass um die Turbine 13) kann der für den jeweiligen Betriebspunkt optimale Zustand bezüglich Druck und Temperatur vor der Expansionsmaschine 4 eingestellt werden. Bei geöffnetem Waste-Gate erhält man die höchste Temperatur, bei geschlossenem Waste-Gate den höchsten Druck. Bei gleichzeitiger Nutzung der Expansionsmaschine 4 auch als Kompressor entsteht somit eine Kombination aus Abgasturbolader und Kompressor. Damit kann bekanntermaßen eine wesentliche Verbesserung des Ansprechverhaltens des Abgasturboladers (Vermeiden eines "Turbolochs") erreicht werden. Das erfindungsgemäße Verfahren umfasst den Schritt, dass die Verbrennungsluft in Strömungsrichtung der Verbrennungsluft vor dem Wärmetauscher 5 und/oder dem Mischer 6 von dem Verdichter 8 verdichtet wird. Ferner wird die Expansionsmaschine 4 als ein zweiter Verdichter betrieben. Selbstverständlich kann es sich bei der Brennkraftmaschine für das erfindungsgemäße Verfahren um eine Viertakt- oder eine Zweitaktbrennraftmaschine oder auch um eine Drehkolbenbrennkraftmaschine handeln. Auch ist es möglich, das erfindungsgemäße Verfahren für eine nach dem ottomotorisch oder dem dieselmotorisch arbeitenden Brennkraftmaschine einzusetzen.

Zusammengefasst ergeben sich durch das erfindungsgemäße Verfahren (ELS) und die erfindungsgemäß ausgestaltete Brennkraftmaschine folgende Vorteile:
❖ Sehr günstiger Kraftstoffverbrauch bei hohem Leistungspotential und sehr gutem Responseverhalten bei Abgasturboaufladung (ATL).
❖ Keine aufwendigen, internen Brennkraftmaschinentechniken (z. B. variable Ventilsteuerung) oder Brennverfahren (z. B. Magerbrennverfahren mit entsprechend aufwendiger Abgasnachbehandlung, HCCI etc.) erforderlich.
❖ Das erfindungsgemäße System (Verfahren und Vorrichtung) lässt sich ohne Änderung am Brennkraftmaschinenkonzept (z. B. an einer TGDI-Brennkraftmaschine (Turbo-Benzin-Direkteinspritzung) über ausschließlich externe Maßnahmen (Umschaltklappe, Abgas-Verbrennungsluft-Wärmetauscher, Expansionsmaschine, Ladeluftkühler) darstellen.
❖ Bei dem erfindungsgemäßen Brennverfahren handelt es sich um ein konventionelles λ = 1 Brennverfahren ohne aufwendiger Abgasnachbehandlung) und damit ist ein weltweiter Einsatz möglich.
❖ Im Verhältnis zum Nutzen existieren nur ein sehr geringer baulicher Aufwand und ein sehr geringes technisches Risiko.

### Bezugszeichenliste:

- 1.: Brennkraftmaschine
- 1'.: Abtriebswelle der Brennkraftmaschine
- 2.: Ansaugtakt
- 3.: Abgasstrang
- 4.: Expansionsmaschine
- 4': Abtriebswelle der Expansionsmaschine
- 5.: Wärmetauscher
- 6.: Mischer
- 7.: Kühler
- 8.: Verdichter
- 9.: Ansauggeräuschdämpfer
- 10.: Abgasreinigungsanlage
- 11.: Schalldämpfer
- 12.: Drosselelement
- 13.: Turbine

## Patentansprüche

1. Verfahren zum Betrieb einer mengengeregelten Brennkraftmaschine (1), mit einem Ansaugtrakt (2) und einem Abgasstrang (3), wobei in dem Ansaugtrakt (2) in Strömungsrichtung einer Verbrennungsluft vor einem Einlassventil der Brennkraftmaschine (1) eine Expansionsmaschine (4) angeordnet ist, deren Abtriebswelle (4') mit einer Abtriebswelle (1') der Brennkraftmaschine (1) oder mit einer Antriebswelle einer elektrischen Maschine koppelbar ist, wobei ein an den Abgasstrang (3) anordenbarer Wärmetauscher (5) vorgesehen ist, **dadurch gekennzeichnet, dass** eine Verbrennungsluft bevor sie durch die Expansionsmaschine (4) strömt in dem Wärmetauscher (5) von einem Abgas der Brennkraftmaschine (1) aufgeheizt wird und
dass die aufgeheizte Verbrennungsluft vor Eintritt in die Expansionsmaschine (4) in einem Mischer (6) mit nicht aufgeheizter Verbrennungsluft gemischt wird und
dass die Verbrennungsluft nach der Expansionsmaschine (4) und vor dem Einlassventil in einem Kühler (7) abgekühlt wird und
dass die Verbrennungsluft vor dem Wärmetauscher (5) und/oder vor dem Mischer (6) von einem Abgasturbolader (8) verdichtet wird und
die Expansionsmaschine (4) als ein zweiter Verdichter betrieben wird.

2. Mengengeregelte Brennkraftmaschine (1) zum Betrieb mit dem Verfahren nach Patentanspruch 1, mit einem Ansaugtrakt (2) und einem Abgasstrang (3), wobei in dem Ansaugtrakt (2) in Strömungsrichtung der Verbrennungsluft vor einem Einlassventil der Brennkraftmaschine (1) eine Expansionsmaschine (4) angeordnet ist, deren Abtriebswelle (4') mit einer Abtriebswelle (1') der Brennkraftmaschine (1) oder mit einer Antriebswelle einer elektrischen Maschine koppelbar ist, wobei ein an den Abgasstrang (3) anordenbarer Wärmetauscher (5) vorgesehen ist,
**dadurch gekennzeichnet, dass** die Verbrennungsluft, bevor sie durch die Expansionsmaschine (4) strömt, in dem Wärmetauscher (5) von dem Abgas der Brennkraftmaschine (1) aufheizbar ist, wobei
in dem Ansaugtrakt (2) in Strömungsrichtung der Verbrennungsluft nach dem Wärmetauscher (5) und vor der Expansionsmaschine (4) ein Mischer (6) vorgesehen ist in dem aufgeheizte und nicht aufgeheizte Verbrennungsluft mischbar ist, wobei
in dem Ansaugtrakt (2) zwischen der Expansionsmaschine (4) und dem Einlassventil ein Kühler (7) für die Verbrennungsluft angeordnet ist, wobei in dem Ansaugtrakt (2) in Strömungsrichtung der Verbrennungsluft vor dem Wärmetauscher (5) und/oder dem Mischer (6) ein Abgasturbolader (8) angeordnet ist und wobei
die Expansionsmaschine (4) als ein zweiter Verdichter betreibbar ist.

## Claims

1. A method for operating a volume-controlled internal combustion engine (1), with an intake tract (2) and an exhaust tract (3), wherein an expansion engine (4) is arranged in the intake tract (2) in the direction of flow of combustion air before an intake valve of the internal combustion engine (1), the output shaft (4') of which expansion engine (4) can be coupled with an output shaft (1') of the internal combustion engine (1) or with a drive shaft of an electric machine, wherein a heat exchanger (5) which can be arranged on the exhaust tract (3) is provided, **characterised in that** a combustion air, before flowing through the expansion engine (4), is heated in the heat exchanger (5) by an exhaust gas of the internal combustion engine (1), and
**in that** the heated combustion air before entering the expansion engine (4) is mixed in a mixer (6) with non-heated combustion air, and
**in that** the combustion air after the expansion engine (4) and before the intake valve is cooled in a cooler (7), and
**in that** the combustion air before the heat exchanger (5) and/or before the mixer (6) is compressed by an exhaust gas turbocharger (8), and the expansion engine (4) is operated as a second compressor.

2. A volume-controlled internal combustion engine (1) for operation with the method according to Claim 1, with an intake tract (2) and an exhaust tract (3), wherein an expansion engine (4) is arranged in the intake tract (2) in the direction of flow of the combustion air before an intake valve of the internal combustion engine (1), the output shaft (4') of which expansion engine can be coupled with an output shaft (1') of the internal combustion engine (1) or with a drive shaft of an electric machine, wherein a heat exchanger (5) which can be arranged on the exhaust tract (3) is provided,
**characterised in that** the combustion air, before flowing through the expansion engine (4), can be heated in the heat exchanger (5) by the exhaust gas of the internal combustion engine (1),
a mixer (6) being provided in the intake tract (2) in the direction of flow of the combustion air after the heat exchanger (5) and before the expansion engine (4), in which mixer heated and non-heated combustion air can be mixed,
a cooler (7) for the combustion air being arranged in the intake tract (2) between the expansion engine (4) and the intake valve,
an exhaust gas turbocharger (8) being arranged in the intake tract (2) in the direction of flow of the combustion air before the heat exchanger (5) and/or the mixer (6), and
the expansion engine (4) being able to be operated as a second compressor.

## Revendications

1. Procédé de gestion d'un moteur à combustion interne (1) à débit régulé comprenant un bloc d'aspiration (2) et une ligne de gaz d'échappement (3), dans le bloc d'aspiration (2) et à l'avant d'une soupape d'admission du moteur à combustion interne (1) dans la direction de circulation de l'air de combustion étant montée une machine de détente (4) dont l'arbre de sortie (4') peut être couplé à l'arbre de sortie (1') du moteur à combustion interne (1) ou à l'arbre d'entraînement d'une machine électrique, un échangeur de chaleur (5) pouvant être monté sur la ligne de gaz d'échappement (3),
**caractérisé en ce qu'**
avant qu'il ne circule dans la machine de détente (4), l'air de combustion est chauffé par les gaz d'échappement du moteur (1) dans l'échangeur de chaleur (5),
l'air de combustion chauffé est mélangé dans un échangeur (6) avec de l'air de combustion non chauffé, avant d'entrer dans la machine de détente (4),
l'air de combustion est refroidi dans un refroidisseur (7) à l'arrière de la machine de détente (4) et à l'avant de la soupape d'admission,
l'air de combustion est comprimé par un turbocompresseur de gaz d'échappement (8) à l'avant de l'échangeur de chaleur (5) et/ou à l'avant du mélangeur (6), et
la machine de détente (4) fonctionne en tant que second compresseur.

2. Moteur à combustion interne à débit régulé (1) destiné à être géré par la mise en oeuvre du procédé conforme à la revendication 1, et comprenant un bloc d'aspiration (2) et une ligne de gaz d'échappement (3), moteur dans lequel est monté, dans le bloc d'aspiration (2) et à l'avant d'une soupape d'admission de ce moteur (1) dans la direction de circulation de l'air de combustion, une machine de détente (4) dont l'arbre de sortie (4') peut être couplé avec l'arbre de sortie (1') du moteur à combustion interne (1) ou avec l'arbre d'entraînement d'une machine électrique, un échangeur de chaleur (5) pouvant être monté sur la ligne de gaz d'échappement (3),
**caractérisé en ce qu'**
avant qu'il ne circule dans la machine de détente (4), l'air de combustion peut être chauffé par les gaz d'échappement du moteur à combustion interne (1) dans l'échangeur de chaleur (5),
dans le bloc d'aspiration (2), à l'arrière de l'échangeur de chaleur (5) et à l'avant de la machine de détente (4) dans le sens de circulation de l'air de combustion, il est prévu un mélangeur (6) dans lequel de l'air chauffé et de l'air non chauffé peuvent être mélangés,
dans le bloc d'aspiration (2), entre le moteur de détente (4) et la soupape d'admission est monté un refroidisseur (7) de l'air de combustion,
dans le bloc d'aspiration (2), à l'avant de l'échangeur de chaleur (5) et/ou du mélangeur (6) dans le sens de circulation de l'air de combustion, est monté un turbocompresseur de gaz d'échappement (8), et
la machine de détente (4) peut fonctionner en tant que second compresseur.
